(19) Europäisches Patentamt / European Patent Office / Office européen des brevets

(11) **EP 4 621 697 A1**

(12) **EUROPEAN PATENT APPLICATION**
published in accordance with Art. 153(4) EPC

(43) Date of publication:
**24.09.2025 Bulletin 2025/39**

(21) Application number: **22965764.8**

(22) Date of filing: **15.11.2022**

(51) International Patent Classification (IPC):
***G06Q 50/06*** (2024.01)

(52) Cooperative Patent Classification (CPC):
**G06Q 50/06**

(86) International application number:
**PCT/JP2022/042434**

(87) International publication number:
**WO 2024/105788 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hitachi, Ltd.
Tokyo 100-8280 (JP)**

(72) Inventors:
• **INAGAKI Ryohei
Tokyo 100-8280 (JP)**
• **IIZUKA Hidehiro
Tokyo 100-8280 (JP)**
• **SASAKI Takashi
Tokyo 100-8280 (JP)**

(74) Representative: **Mewburn Ellis LLP
Aurora Building
Counterslip
Bristol BS1 6BX (GB)**

(54) **CARBON NEUTRAL METHANE MANAGEMENT SYSTEM**

(57) A carbon neutral methane management system (1) is used for a grid that supplies a user with a mixed gas including city gas and carbon neutral methane (hereinafter, "CN-CH4"). The carbon neutral methane management system (1) includes: an arithmetic processing unit (13) that calculates a calorific value of the mixed gas in the grid; a supply/use management unit (12) that gives an instruction to adjust at least an amount of the city gas supplied to the grid or an amount of city gas used by the user or an amount of CN-CH4 supplied to the grid or an amount of CN-CH4 used by the user so that the calorific value of the mixed gas is kept within a restriction range of the grid; and a certificate issuing unit (11) that issues a certificate certifying that an amount of CN-CH4 supplied to the grid by a CN-CH4 supplier matches an amount of CN-CH4 supplied that has been adjusted by the supply/use management unit or a certificate certifying that an amount of CN-CH4 used by the user matches an amount of CN-CH4 used that has been adjusted by the supply/use management unit.

*FIG. 1*

## Description

Technical Field

The present invention relates to a carbon neutral methane management system that utilizes carbon neutral methane for an existing city gas grid and that manages use of carbon neutral methane in the grid.

Background Art

A rapidly growing momentum for prevention of global warming in recent years has led many advanced countries to declare carbon neutral by 2050 and promote decarbonization as their national strategies. Japan too announced "Carbon Neutral by 2050" in October 2020, pledging that the nation would realize a decarbonized society to reduce emissions of greenhouse gases (GHGs) to substantially zero by 2050.

In addition, on June 18, 2021, the Ministry of Economy, Trade and Industry formulated the "Green Growth Strategy" for achieving Carbon Neutral (which will hereinafter be referred to as CN) by 2050. The green growth strategy formulates action plans to be implemented in 14 important fields expected to see a future growth, from the viewpoint of industrial/energy policies, sets a lofty national goal, and p/resents a prospect as specifically as possible.

"Next generation thermal energy industry", one of the 14 important fields, aims to replace the city gas with a CN gas by 2050. Steps to achieve this goal involve two milestones: one is to introduce 1% of carbon neutral methane (which will hereinafter be referred to as CN-CH4) into an existing gas grid by 2030 and the other is to introduce 90% of CN-CH4 by 2050.

CN-CH4 refers to synthetic methane created from carbon dioxide ($CO_2$) recovered from an exhaust gas, the air, or the like produced in industrial/power generation fields and hydrogen ($H_2$) extracted from renewable energy or biomass, or to biomethane produced by fermentation treatment of organic wastes, such as food waste and livestock manure. Synthetic methane is created by a reaction expressed by the following chemical formula (1).

$$CO_2 + 4H_2 \rightarrow CH_4 + 2H_2O \ ... \qquad (1)$$

Utilization of renewable energy power is a precedent in which CN utility is used and distributed in an existing grid. For example, NPL 1 discloses a system in which the environmental value of electric power generated by renewable energy, such as wind power, solar power, and hydraulic power, that does not involve $CO_2$ emission in the power generation process is expressed an added value in the form of a non-fossil certificate and is traded.

In May 2018, a non-fossil value exchange market was created, in which the non-fossil value of electric power that is expressed as a certificate can be traded. In this manner, for electric power trading, a system that allows trading of CN values is already established in the business scene. However, while the system is already put into practice, further technological development is yet to be made with regard to securing the transparency and fairness of transactions. For example, PTL 1 proposes a non-fossil certificate trading management system using a blockchain.

Citation List

Patent Literature

PTL 1: JP 2020-119143 A

Non-Patent Literature

NPL 1: New Electric Power Network, "Non-fossil Certificate", [online], New Electric Power Network, [searched on November 8, 2022], Internet, <URL: https://ppsnet.org/glossary/73482>

Summary of Invention

Technical Problem

The plans to introduce CN-CH4 into the existing grid, the plans being shown as part of the green growth strategy described above, are the plans for application of the system for trading non-fossil certificates of electric power. However, there is a wide difference in transaction between electric power and gas. In the case of electric power, the consumer is able to use electric power of the same quality, regardless of whether it originates from a fossil fuel or non-fossil fuel. In the case of gas, however, the quality of a gas used by the consumer varies, depending on the volume of CN-CH4 supplied to the grid.

This is due to a fact that as the calorific value of the city gas 13A grade distributed in many areas of Japan is generally defined as 42 MJ/Nm3 to 45 MJ/Nm3, the calorific value of methane is about 40 MJ/Nm3. Because of this difference in calorific value, therefore, a volume of CN-CH4 injected into the grid causes a change in the quality of a gas distributed in the grid, that is, a change in the calorific value. Therefore, different from the case of electric power trading in which certificates are traded through digital-based transactions, the case of CN-CH4 trading requires not only the digital-based transactions but also management of physical operation of the grid.

To distribute CN-CH4 through the existing gas grid and realize fair trading of an environmental value between a CN-CH4 supplier and a CN-CH4 consumer, the fact that the calorific value of the gas in the grid varies depending on supply of CN-CH4 needs to be taken into consideration. An object of the present invention is to provide a carbon neutral methane management system that manages a gas grid in response to a gas composition change in the gas grid and that issues a CN certificate.

Solution to Problem

In order to solve the above problems, a CN-CH4 management system of the present invention is provided as a carbon neutral methane management system used for a grid that supplies a user with a mixed gas including city gas supplied from a city gas supplier and carbon neutral methane supplied from a carbon neutral methane supplier. The CN-CH4 management system includes: an arithmetic processing unit that calculates a calorific value of the mixed gas in the grid in a given unit period; a supply/use management unit that gives an instruction to adjust at least an amount of the city gas supplied to the grid or an amount of the city gas used by the user or an amount of the carbon neutral methane supplied to the grid or an amount of the carbon neutral methane used by the user in the given unit period so that the calorific value of the mixed gas in the grid, the caloric value being calculated by the arithmetic processing unit, is kept within a restriction range of the grid; and a certificate issuing unit that issues a certificate certifying that an amount of carbon neutral methane supplied to the grid by the carbon neutral methane supplier in the given unit period matches an amount of carbon neutral methane supplied that has been adjusted by the supply/use management unit or a certificate certifying that an amount of carbon neutral methane used by the user in the given unit period matches an amount of carbon neutral methane used that has been adjusted by the supply/use management unit.

Advantageous Effects of Invention

According to the present invention, a carbon neutral methane management system that manages a gas grid in response to a gas composition change in the grid and that issues a CN certificate can be provided.

Brief Description of Drawings

[FIG. 1] FIG. 1 is an overall configuration diagram showing stakeholders and a system configuration according to an embodiment.
[FIG. 2] FIG. 2 is an image diagram for explaining a flow of a process up to the issue of a CN-CH4 certificate.
[FIG. 3A] FIG. 3A is an image diagram of a flow of a process from application for a CN-CH4 supply plan and adjustment of the CN-CH4 supply plan.
[FIG. 3B] FIG. 3B is an image diagram of a flow of a process from application for a CN-CH4 use plan and adjustment of the CN-CH4 use plan.
[FIG. 4A] FIG. 4A is a diagram for explaining a CN-CH4 use application made in a period N.
[FIG. 4B] FIG. 4B is a diagram for explaining a CN-CH4 supply application made in a period N+1.
[FIG. 5] FIG. 5 depicts an example in which a CN-CH4 certificate is traded between respective CN-CH4 management systems of grids.
[FIG. 6] FIG. 6 depicts an example in which a CN-CH4 certificate is traded between respective CN-CH4 management systems of grids via an aggregation coordinator.
[FIG. 7] FIG. 7 depicts a CN-CH4 supply plan in the period N, a supply amount in an execution period, and a CN-CH4 use plan.

Description of Embodiments

Embodiments of the present invention will hereinafter be described with reference to the drawings. The same constituent elements will be denoted by the same reference signs, and a description overlapping the previous description may be omitted. It should be noted that the present invention is not limited to embodiments described below.

[First Embodiment]

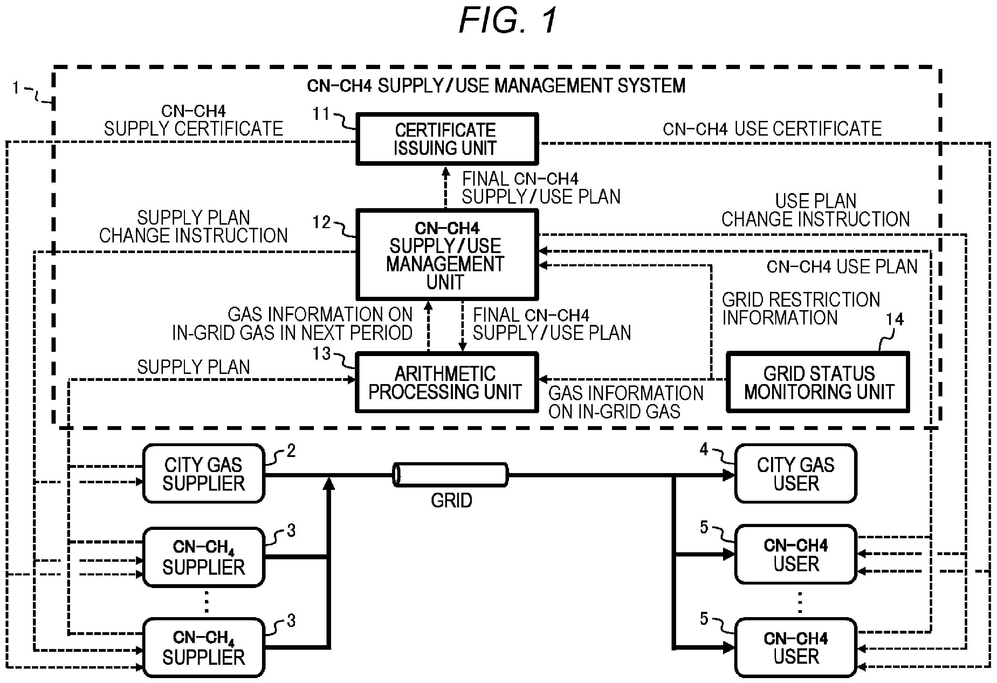

FIG. 1 is an overall configuration diagram showing stakeholders and a system configuration according to an embodiment. Referring to FIG. 1, an overall concept of this embodiment will first be described.

An existing city gas grid works such that a city gas supplier 2 in each local area supplies city gas to a gas pipeline and a city gas user 4 uses city gas supplied through the gas pipeline, as a heat source or the like. The city gas supplier 2 is, for example, a general gas pipeline service provider. This service provider, in general, stores LNG imported from overseas in a tank at an LNG receiving terminal and then, after subjecting LNG to vaporization, calorific value adjustment, and odorization, supplies LNG to a gas pipeline. In the same manner as in the case of LNG, the service provider subjects natural gas extracted from a domestic natural gas field to calorific value adjustment and odorization and then supplies natural gas to the gas pipeline.

A CN-CH4 supplier 3 is a service provider that supplies manufactured CN-CH4 to the gas pipeline managed by the city gas supplier 2 in each local area. In this embodiment, one or more such service providers are operating in the grid.

CN-CH4 supplied to the gas pipeline is synthetic methane created from, for example, $CO_2$ discharged from biomass power plants, thermal power plants, large-scale industrial facilities, etc., and $H_2$ produced by, for example, electrolysis of water, using such renewable energy power as solar power, wind power, and hydraulic power.

A combination of $CO_2$ and $H_2$ making up CN-CH4 is not uniquely determined. Any combination of $CO_2$ and $H_2$ may be adopted proving that $CO_2$ that would have been released to the atmosphere when not reused and $H_2$ produced by a method not involving $CO_2$ emission in the production process are combined together.

It is unnecessary that a CN-CH4 supplier and a CN-CH4 producer be the same operator. In this embodiment, the CN-CH4 supplier 3 is a service provider that finally supplies CN-CH4 to the existing gas pipeline and is not required to provide other services.

A CN-CH4 user 5 uses CN-CH4 for fuel or the like. For example, the CN-CH4 user 5 is an operator and/or an end user, such as a household, who wishes to actively consume CN-CH4 while using the existing gas grid. For example, an industrial operator or the like who is required to make commitment to CN in view of its Scope2 (indirect greenhouse gas emission resulting from use of electricity, heat, and steam supplied from other companies) is recommended to actively use CN-CH4 from the viewpoint of decarbonization of utilities the operator's organizations have.

A CN-CH4 supply/use management system 1 of FIG. 1 allows smooth supply/use of CN-CH4 between the above-mentioned stakeholders via a grid composed of gas pipelines for a mixed gas including city gas and CN-CH4. For this, the CN-CH4 supply/use management system 1 includes an arithmetic processing unit 13, a grid status monitoring unit 14, a CN-CH4 supply/use management unit 12, and a certificate issuing unit 11.

The grid status monitoring unit 14 acquires and holds gas information on in-grid gas and restriction information on the grid. The gas information on in-grid gas includes information on a calorific value of the mixed gas in the grid. The gas information on in-grid gas may further include information on a gas state, such as the pressure of in-grid gas. In addition, it is preferable that the grid status monitoring unit 14 be able to acquire gas information and restriction information on a different grid.

The arithmetic processing unit 13 calculates an average calorific value of the mixed gas in the grid in a certain unit period. Specifically, the arithmetic processing unit 13 acquires an amount of city gas supply to the grid, an amount of CN-CH4 supply to the grid, and a planned amount of CN-CH4 used by the CN-CH4 user 5 in a certain unit period and gas information on in-grid gas at the start of the unit period, the gas information being acquired by the grid status monitoring unit 14, and, from these pieces of information, calculates a gas calorific value contributing to certificate issuance in a period in which CN-CH4 trading is carried out.

The CN-CH4 supply/use management unit 12 plays a role of adjusting a calorific value and the like in the gas grid while taking into consideration state information, such as a calorific value and pressure of in-grid gas, information on excess or shortage of CN-CH4 in a different grid, both information being inputted from the grid status monitoring unit 14, and restrictions on the calorific value of in-grid gas, such as a lower limit of the gas calorific value that is determined according to specifications of end user's equipment and an upper limit of a CN-CH4 supply amount that is determined in compliance with laws/regulations.

The CN-CH4 supply/use management unit 12 gives an instruction to adjust at least an amount of city gas supplied to the grid or an amount of city gas use by the user or an amount of CN-CH4 supplied to the grid or an amount of CN-CH4 use by the user so that a calorific value of the mixed gas in the grid, the calorific value being calculated by the arithmetic processing unit, is kept within a restriction range of the grid. Final versions of a CN-CH4 supply amount and a CN-CH4 use amount that result from adjustment by the CN-CH4 supply/use management unit 12 are transmitted to the arithmetic processing unit 13, as supply/use plans. The arithmetic processing unit 13 transmits gas information on in-grid gas in the next period, together with gas information on in-grid gas currently acquired from the grid status monitoring unit 14, to the CN-CH4 supply/use management unit 12.

The certificate issuing unit 11 receives a final version of CN-CH4 supply/use plans and gas information, such as a calorific value in the grid in the next period, from the CN-CH4 supply/use management unit 12, and, based on these pieces of information, issues a CN-CH4 certificate that permits the CN-CH4 supplier 3 to supply a given amount of CN-CH4 in a period specified by the plans and a CN-CH4 certificate that permits the CN-CH4 user 5 to use a given amount of CN-CH4 in the period specified by the plans.

Although not illustrated, to check whether the CN-CH4 supply/use plans for which the CN-CH4 certificates have been issued are actually implemented, a measuring instrument, such as a flow meter, is set at the exit of the CN-CH4 supplier and at the entrance of the CN-CH4 user, and the CN-CH4 supply/use management unit acquires information from the measuring instrument to monitor a plan implementation status.

The CN-CH4 supply/use management system 1 includes a processor, a communication interface, a storage device, and an input/output interface. The CN-CH4 supply/use management system 1 may be a single computer, such as a server, or a plurality of computers, such as servers that work together to offer various functions.

The processor serves as a central processing unit that controls operation of each of units making up the CN-CH4 supply/use management system 1. The processor is, for example, a central processing unit (CPU), a digital signal processor (DSP), an application specific integrated circuit (ASIC), or the like. The storage device stores programs executed by the processor, data processed by the processor, and the like. The storage device is a flash memory, a random access memory (RAM), a read only memory (ROM), or the like. The communication interface is an interface that communicates with external equipment via a network, such as the Internet. The input/output interface receives an operation instruction or the like from an administrator who operates an input device connected to the input/output interface. The input device is, for example, a keyboard, a touch panel, a mouse, a microphone, or the like. To the input/output interface, for example, a display device, such as an LCD, an electroluminescence (EL) panel, or an organic EL panel, or an output device, such as a printer or a speaker, can be connected. The input/output interface outputs data and information to the output device, the data and information being processed by the processor or stored in the main storage device. The communication I/F allows the CN-CH4 management system to communicate with the city gas supplier, the CN-CH4 supplier, the CN-CH4 user, a CN-CH4 supply/use management system that manages a different grid, the aggregation coordinator, and the like.

[Second Embodiment]

In a second embodiment and other embodiments to follow, description of the same configuration as that of the first embodiment will be omitted.

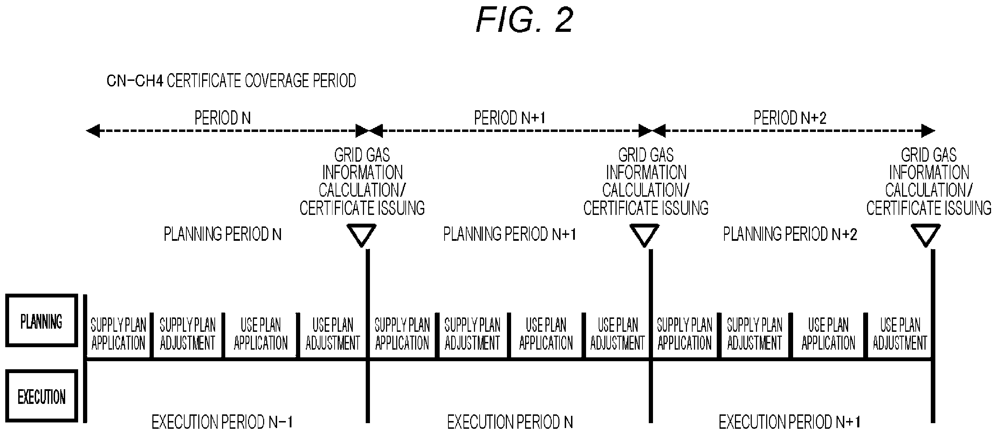

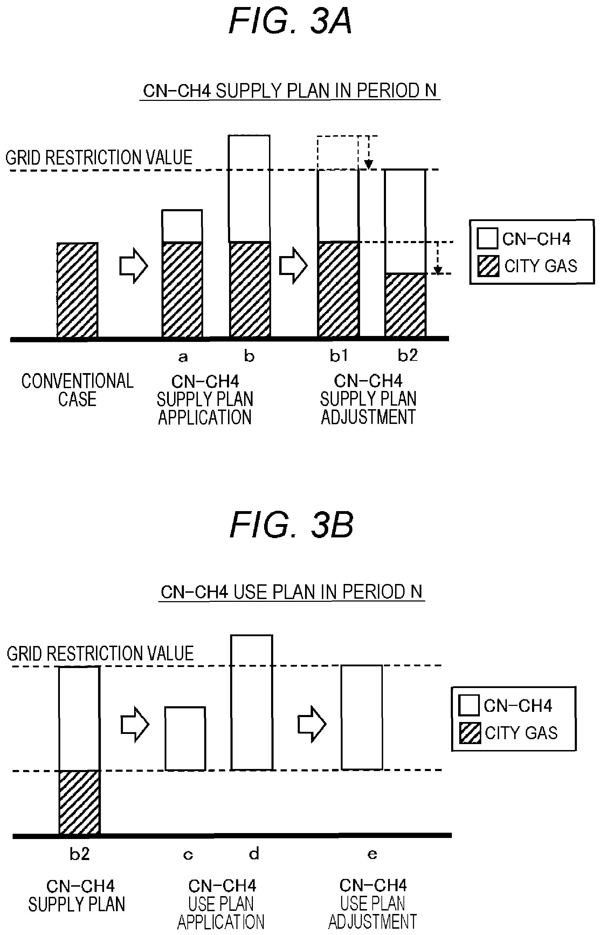

In the second embodiment, an example in which, in the CN-CH4 supply/use management system 1 of FIG. 1, the CN-CH4 supply/use management unit 12 adjusts CN-CH4 supply/use plans and certifies that the CN-CH4 supplier 3 and the CN-CH4 user 5 will supply and use CN-CH4, respectively, will be described with reference to FIGS. 2, 3A, and 3B. FIG. 2 is an image diagram for explaining a flow of a process up to the issue of a CN-CH4 certificate, and FIGS. A and 3B are image diagrams showing an example of a method of adjusting CN-CH4 supply/use plans.

A plan/execution schedule up to the issue of a CN-CH4 certificate will be described with reference to FIG. 2.

In an actual situation, allowing the CN-CH4 supplier 3 to supply CN-CH4 to the gas grid and running a series of transactions involving the CN-CH4 user 5 require a planning period in which an application for and adjustment of CN-CH4 supply/use plans are made and an execution period in which determined CN-CH4 supply/use plans are executed, as shown in FIG. 2.

In a period N in FIG. 2, CN-CH4 supply/use plans are adjusted in a planning period N, and at the same time, CN-CH4 supply/use plans approved in the previous period N-1 (not illustrated) are executed in in an execution period N-1, which is equivalent to the period N.

Each of periods N, N+1, N+2, and the like has its length not limited to a specific length. A longer period length results in the lower accuracy of the CN-CH4 supply/use plans. It is preferable, for this reason, that the period length be determined to be, for example, about one month, which is a period in which the prediction accuracy of the plans does not drop.

Planning periods include a CN-CH4 supply plan application period (supply plan application in FIG. 2), a CN-CH4 supply plan adjustment period (supply plan adjustment in FIG. 2), a CN-CH4 use plan application period (use plan application in FIG. 2), a CN-CH4 use plan adjustment period (use plan adjustment in FIG. 2), and an in-grid gas information updating/CN-CH4 certificate issuing period.

Among these planning periods, the CN-CH4 supply plan application period, the CN-CH4 supply plan adjustment period, the CN-CH4 use plan application period, and the CN-CH4 use plan adjustment period may be overlapped or changed in their order to be put in an arrangement different from the arrangement shown in FIG. 2, which means their arrangement is not limited to a specific arrangement. However, because starting CN-CH4 use plan application after CN-CH4 supply plan adjustment renders readjustment of a CN-CH4 use plan impossible, the arrangement shown in FIG. 2 is more preferable.

In the in-grid gas information updating/CN-CH4 certificate issuing period, first, the arithmetic processing unit 13 shown in FIG. 1 updates gas information on in-grid gas in the next period, based on CN-CH4/city gas supply plans acquired from the CN-CH4 supplier 3 and the city gas supplier 2 and on gas information on in-gird gas acquired from the grid status monitoring unit 14.

This gas information on in-grid gas indicates, for example, a calorific value. Currently, however, when a user uses city gas, its charge is calculated in terms of a volume of city gas used. Now, when CN-CH4 is mixed with in-grid gas, an overall calorific value in the grid decreases because a calorific value of CN-CH4 is lower than a calorific value of city gas. Thus, to get the same level of calorific value, a larger volume of gas is used, in which case calculating the charge in terms of a volume of the gas used gives a larger charge. Hence the consumer suffers a greater cost.

It is therefore necessary to know the calorific value of the in-grid gas in an execution period and to know an amount of CN-CH4 used and a charge thereof in terms of calorific value. This makes it necessary to calculate and update the gas information on in-grid gas, especially, the calorific value of the in-grid gas.

Besides, there is no guarantee that CN-CH4 is supplied and used as planned in the actual execution period. For this reason, the grid gas information including both CN-CH4 supply/use plans and a supply/use status in the actual execution period is updated.

The gas information on in-grid gas may be updated on a necessary basis. It is nevertheless preferable that the gas information be updated after completion of adjustment of the CN-CH4 supply/use plans. In this embodiment, the gas information is updated after completion of adjustment of the CN-CH4 use plan, that is, at the end of the planning period.

After the gas information on in-grid gas is updated, a CN-CH4 certificate is issued, which describes a calorific value of gas supplied specified by the CN-CH4 supply plan, a calorific value of gas used specified by the use plan, and the like. In this process, the calorific value of gas supplied specified by the CN-CH4 supply plan, the calorific value of gas used specified by the use plan, and the like are acquired from the gas information on in-grid gas, which has been updated by adding information on the CN-CH4 supply/use plans thereto.

In this embodiment, according to the CN-CH4 supply/use plans for which the CN-CH4 certificate has been issued in the period N shown in FIG. 2, CN-CH4 is actually supplied and used in an execution period equivalent to the period N+1, and as supply/use of CN-CH4 is executed, adjustment of the next CN-CH4 supply/use plans and issuance of a CN-CH4 certificate are put in procession. Thereafter, planning and execution are repeated in the order described above.

What is described above is the flow of the process up to the issuance of the CN-CH4 certificate in FIG. 2. In the following, a method of adjusting CN-CH4 supply/use plans necessary for issuance of a CN-CH4 certificate will be described with reference to FIGS. 3A and 3B.

FIG. 3A is an image diagram of a flow of a process from application for a CN-CH4 supply plan and adjustment of the CN-CH4 supply plan, and FIG. 3B is an image diagram of a flow of a process from application for a CN-CH4 use plan and adjustment of the CN-CH4 use plan. Hatched portions each represent an amount of city gas, and white portions each represent an amount of CN-CH4. In this embodiment, description is made on the assumption that planning period items (CN-CH4 supply plan application, CN-CH4 supply plan adjustment, CN-CH4 use plan application, and CN-CH4 use plan adjustment) in an adjustment flow shown in FIGS. 3A and 3B are arranged in the same order as in FIG. 2. However, arrangement of planning period items is not limited to this case.

First, a CN-CH4 supply plan will be described with reference to FIG. 3A. When the CN-CH4 supplier 3 supplies CN-CH4 to the gas grid in a conventional situation where only city gas is distributed in the grid, the CN-CH4 supplier 3 applies to the CN-CH4 supply/use management system 1 for a CN-CH4 supply plan. Whether an amount of CN-CH4 indicated in the supply plan application is within a restriction range of the grid is found case by case. There is a case where the amount of CN-CH4 is within the restriction range (CN-CH4 supply plan application a) and there is also a case where the amount of CN-CH4 is not within the restriction range (CN-CH4 supply plan application b). Grid restrictions in these cases include, but is not limited to, an internal pressure of the grid, an upper limit to a CN-CH4 supply amount, and the like.

In the case of the CN-CH4 supply plan application a, all CN-CH4 suppliers 3 are given an approval for their CN-CH4 supply plans and a stage of a CN-CH4 use plan ensues. In the case of the CN-CH4 supply plan application b, however, adjustment of its supply plan is required. Methods of this adjustment include reducing an amount of CN-CH4 supplied specified in the CN-CH4 supply plan (CN-CH4 supply plan adjustment b1), reducing an amount of city gas supplied (CN-CH4 supply plan adjustment b2), and reducing both the amount of CN-CH4 supplied and the amount of city gas supplied.

For example, when the planned amount of CN-CH4 supplied is reduced as in the case of the CN-CH4 supply plan adjustment b1, each CN-CH4 supplier 3 may be instructed to reduce the planned amount of CN-CH4 supplied at an equal ratio, or the planned amount of CN-CH4 supplied may be reduced by letting a user having made the supply plan application first reduce the planned amount first or by letting a user having won a lottery reduce the planned amount first. Any method of reducing the planned amount of CN-CH4 supplied may be adopted. Likewise, when the amount of city gas supplied is reduced as in the case of the CN-CH4 supply plan adjustment b2, the method descried above is adopted to give an instruction to reduce the amount of city-gas-to-be-supplied in a case where a plurality of city gas suppliers 2 are present.

In this manner, the CN-CH4 supply plan is adjusted and approved.

An application for a CN-CH4 use plan will then be described with reference to FIG. 3B. FIG. 3B depicts a case where after a CN-CH4 supply plan subjected to CN-CH4 supply plan adjustment b2 is approved, a stage of a CN-CH4 use plan ensues.

The CN-CH4 user 5 applies to the CN-CH4 supply/use management system 1 for a planned amount of CN-CH4 used. This application is made in a case where a total amount of CN-CH4 used indicated in the application is equal to or smaller than a planned amount of CN-CH4 supplied (CN-CH4 use plan application c) and in a case where the total amount of CN-CH4 to use indicated in the application is larger than the planned amount of CN-CH4 supplied (CN-CH4 use plan application d). In the case of the CN-CH4 use plan application c, every CN-CH4 user 5 is given an approval for his or her CN-CH4 use plan. In the case of the CN-CH4 use plan application d, however, the planned amount of CN-CH4 used specified therein needs to be reduced, and the CN-CH4 supply/use management unit 12 adjusts the planned amount of CN-CH4 used.

The planned amount of CN-CH4 used is adjusted by the same method by which the planned amount of CN-CH4 supplied is adjusted. Each CN-CH4 supplier 5 may be instructed to reduce the planned amount of CN-CH4 used at an equal ratio, or the planned amount of CN-CH4 used may be reduced by letting a user having made the use plan application first reduce the planned amount first or by letting a user having won a lottery reduce the planned amount first, or demand for CN-CH4 may be curbed by adjusting its sales cost. Any method of reducing the planned amount of CN-CH4 used may be adopted. In this manner, the CN-CH4 supply/use management unit 12 adjusts and approves the CN-CH4 use plan.

After approving the CN-CH4 supply/use plans, the CN-CH4 supply/use management unit 12 transmits CN-CH4 supply plan information and city gas supply plan information, to the arithmetic processing unit 13, and, based on these pieces of supply plan information and on gas information on in-grid gas acquired from the grid status monitoring unit 14, the arithmetic processing unit 13 updates gas information on in-grid gas in the next period in which the CN-CH4 supply/use plans are executed.

In a case where the arithmetic processing unit 13 calculates a calorific value included in gas information on in-grid gas, when a ratio of a planned amount of CN-CH4 supplied to an amount of the entire in-grid gas in terms of volume fraction is Xvol%, an average calorific value Have,N+1 in the entire next period N+1 is given by the following formula (2). In formula (2), H denotes a calorific value [MJ/Nm3], and Have,N, Have,N+1, and HCH4 denote an average calorific value in the current period N, an average calorific value in the next period N+1, and a calorific value of methane, respectively.

$$\text{Have,N+1 = HCH4} \times \text{X/100 + Have,N} \times \text{(1−X/100)} \quad ... \quad (2)$$

After approval of the CN-CH4 supply/use plans and calculation on the gas information on in-grid gas in the next period, which are described above, a CN-CH4 certificate that permits the CN-CH4 supplier 3 to supply a given amount of CN-CH4 in the period specified by the plans and a CN-CH4 certificate that permits the CN-CH4 user 5 to use a given amount of CN-CH4 in the period specified by the plans are issued, based on the CN-CH4 supply/use plans adjusted by the CN-CH4 supply/use management unit 12 and calorific value information on in-grid gas calculated by the arithmetic processing unit 13, which have been described in the first embodiment.

An example of a CN-CH4 certificate according to this embodiment will then be described.

When a calorific value of methane, which is denoted as HCH4, is 40.00 MJ/Nm3, a calorific value of in-grid gas in the current period, which is denoted as Have,N, is 43.00 MJ/Nm3, and a ratio of a planned amount of CN-CH4 supplied in the next period to an amount of in-grid gas in terms of volume fraction X is 1vol%, an average calorific value of the in-grid gas in the next period, which is denoted as Have,N+1, is calculated from formula (2), at 42.97 MJ/Nm3.

Thus, when the CN-CH4 user 5 makes an application for use of 1000 MJ of CN-CH4 and has the application approved by the CN-CH4 supply/use management system 1, the CN-CH4 user 5 is allowed to use in-grid gas of 23.3Nm3 as CN-CH4. It is preferable that these figures be written on the CN-CH4 certificate. If the CN-CH4 user 5 uses gas of more than 23.3Nm3, an excess portion of gas over 23.3Nm3 is considered to be CO2 emission.

According to this embodiment, as CN-CH4 supply/use plans are adjusted, a CN-CH4 certificate can be issued according to an actual condition of in-grid gas, that is, a mixing rate of CN-CH4,.

[Third Embodiment]

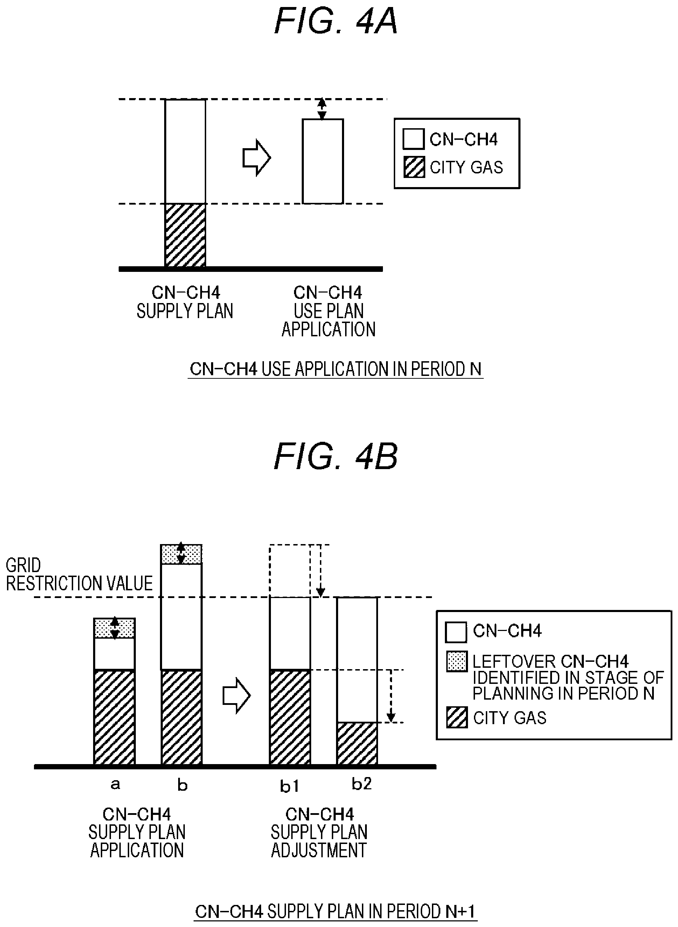

In a third embodiment, a method for dealing with a situation where a planned amount of CN-CH4 used is smaller than a planned amount of CN-CH4 supplied and an unused portion of CN-CH4 is physically left over in the grid in the next period will be described with reference to FIGS. 4A, 4B, 5, and 6.

FIG. 4A is a diagram for explaining a CN-CH4 use application made in the period N, showing a situation where a planned amount of CN-CH4 used is smaller than a planned amount of CN-CH4 supplied, which is adjusted and approved by the CN-CH4 supply/use management unit 12, in the planning period equivalent to the period N. This means that if supply and use of CN-CH4 is executed as planned in an execution period, a portion of CN-CH4 is left over in the grid. In this case, as described in the second embodiment, every CN-CH4 user 5 having applied for use of CN-CH4 is given an approval for his or her use plan and a CN-CH4 certificate is issued to the CN-CH4 user 5.

In this manner, when it is known in advance in the planning stage in the period N that the CN-CH4 will certainly be left over in the grid in the execution period N+1, it is preferable that a CN-CH4 supply plan be set up in the supply planning stage in the period N+1 as CN-CH4 left over is taken into consideration, as indicated in FIG. 4B for explaining a CN-CH4 supply application made in the period N+1.

Specifically, when the above leftover CN-CH4 is added to a total amount of CN-CH4 supplied indicated in a supply plan of the CN-CH4 supplier 3 and the resulting sum is still within a grid restriction value range (CN-CH4 supply plan application a), every CN-CH4 supplier 3 is given an approval for his or her supply plan. When the total amount of CN-CH4 supplied indicated in the supply plan of the CN-CH4 supplier 3 already exceeds the grid restriction value (CN-CH4 supply plan application b) or when adding the leftover CN-CH4 to the total amount of CN-CH4 supplied gives a sum larger than the grid restriction value range (not illustrated), adjustment is made by the method of adjusting the CN-CH4 supply plan that has been described in FIG. 2.

In this case, when the amount of CN-CH4 supplied greatly exceeds the grid restriction value, the CN-CH4 supply/use management unit 12 adjusts the amount of CN-CH4 supplied or the amount of city gas supplied. For realizing carbon neutral, an adjustment method of reducing the amount of city gas supplied is preferable (CN-CH4 supply plan adjustment b2).

Supply plan adjustment to deal with CN-CH4 left over has been described above. This leftover CN-CH4 can be traded according to a CN-CH4 use plain in the next period. There may be, however, a case where CN-CH4 is left over again and again, leading an increase in leftover CN-CH4 over a long period. Such a case poses a physical problem that a volume fraction of CN-CH4 in the grid increases, and because of this, an overall calorific value becomes equal to or smaller than a design calorific value of existing equipment running on in-grid gas.

To deal with this problem, with regard to gas information on in-grid gas in the current period that is acquired by the grid status monitoring unit 14 and gas information on in-grid gas in the next period that is updated by the arithmetic processing unit 13, a threshold to a calorific value may be set, and when the calorific value becomes equal to or smaller than the threshold, a gas with a high calorific value, such as propane or butane, may be supplied to the grid to adjust the calorific value.

In handling of leftover CN-CH4 that increases in the above-described situation, a CN-CH4 certificate may be transferred or sold to a different grid not connected to the grid.

Specifically, the CN-CH4 supply/use management unit 12 informs the certificate issuing unit 11 of an amount of CN-CH4 left over shown in FIG. 4A, and the certificate issuing unit 11 issues a CN-CH4 certificate.

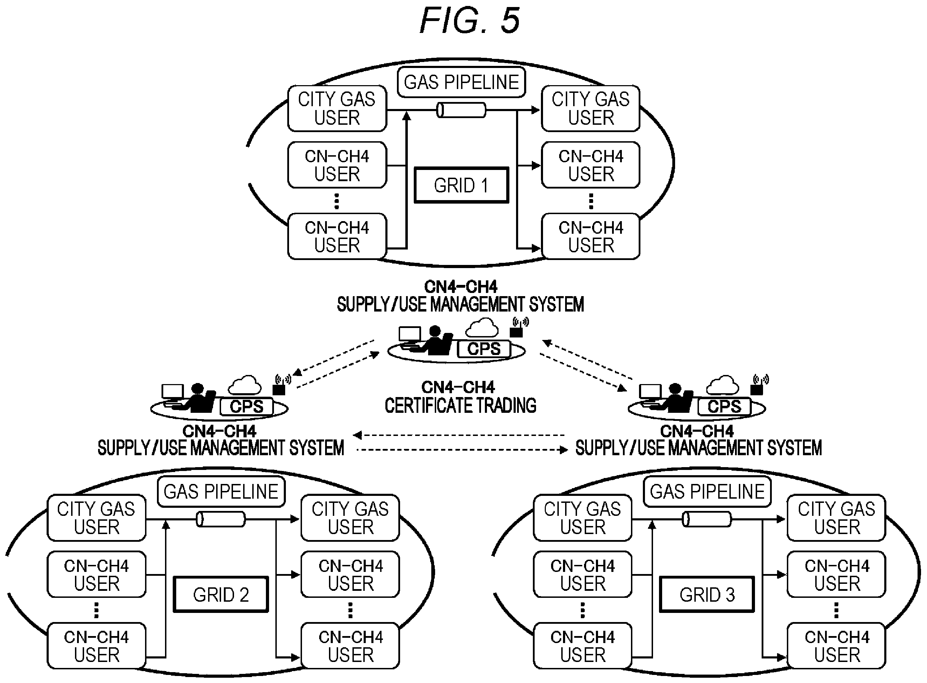

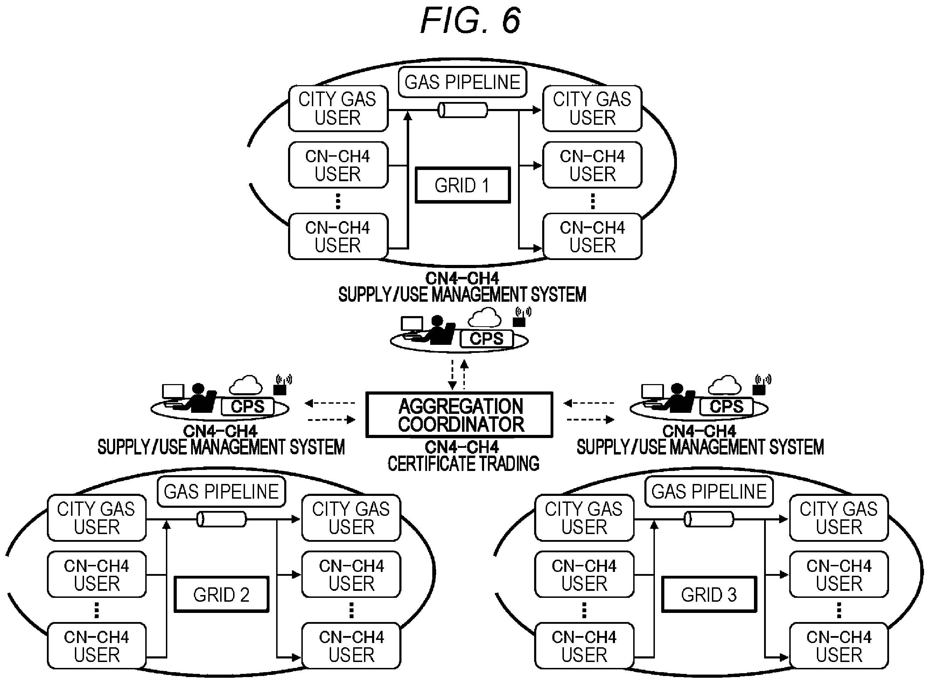

Then, as shown in FIG. 5, the issued CN-CH4 certificate may be directly traded by the CN-CH4 supply/use management system 1 of each grid or, in the case of this embodiment, transferred/sold by the same. In addition, as shown in FIG. 6, an appointed aggregation coordinator may coordinate CN-CH4 certificate trading. In this manner, any method of trading a CN-CH4 certificate with a different grid may be adopted.

In such a case where leftover CN-CH4 is traded with a different grid, as a CN-CH4 certificate, this CN-CH4 left over in the grid is no longer considered to be carbon neutral. The CN-CH4 supply/use management unit 12, therefore, manages information on this leftover CN-CH4, adds the information to gas information on in-grid gas in the next period, and when setting up a CN-CH4 use plan, adjusts the CN-CH4 use plan while taking into consideration the fact that the leftover CN-CH4 is excluded from an application for the CN-CH4 use plan.

According to this embodiment, in a situation where a planned amount of CN-CH4 used is smaller than a planned amount of CN-CH4 supplied and a portion of CN-CH4 is physically left over in the grid in the next period, the embodiment allows adjustment to make when a CN-CH4 supply plan is set up, an action to deal with a case where a calorific value requirement of equipment running on in-grid gas is not met due to a calorific value change in the grid, and digital-based CN-CH4 trading.

In this embodiment, the situation where the planned amount of CN-CH4 used is smaller than the planned amount of CN-CH4 supplied has been described. However, by adopting the above method, a case where an amount of CN-CH4 used by the CN-CH4 user 5 in the execution period is smaller than the planned amount of CN-CH4 used can also be handled in the same manner.

[Fourth Embodiment]

In the CN-CH4 supply/use management system 1 of the embodiments, when supplying CN-CH4 according to a CN-CH4 supply plan which is approved and for which a CN-CH4 certificate is issued in a planning period, a certain CN-CH4 supplier 3 may become unable to supply an amount of CN-CH4 specified in the approved CN-CH4 supply plan in an execution period because of a problem, such as an equipment failure. A method of dealing with such a case will then be described. In this case, an actual amount of CN-CH4 supplied turns out smaller than a planned amount of CN-CH4 supplied. As a result, gas information on in-grid gas described in a CN-CH4 certificate, such as an actual calorific value, changes.

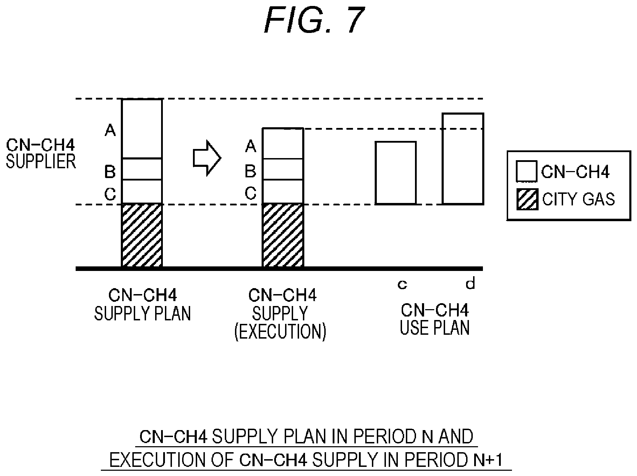

FIG. 7 depicts a CN-CH4 supply plan in the period N, a supply amount in an execution period, and a CN-CH4 use plan. FIG. 7 shows also a situation where CN-CH4 suppliers 3 of A, B, and C are present, each CN-CH4 supplier having a CN-CH4 supply plan approved in a CN-CH4 certificate, and an amount of CN-CH4 supplied by the CN-CH4 supplier 3 of A turns out smaller than a planned amount of CN-CH4 supplied for which a CN-CH4 certificate has been issued, in an execution period shown in FIG. 7 as CN-CH4 supply (execution).

In this case, as described above, a volume fraction of CN-CH4 in the grid decreases by a portion of CN-CH4 that cannot be supplied. As a result, a calorific value in the grid increases to become different from a calorific value described in the CN-CH4 certificate.

Specifically, because the CN-CH4 certificate issued defines an amount of CN-CH4 in terms of a calorific value while the CN-CH4 user 5 defines an amount of CN-CH4 in terms of a volume of gas to use in conformity to the actual condition of measuring instruments, when a volume of gas specified in the CN-CH4 certificate, the gas having its calorific value increased, is used, it mean that a calorific value larger than a calorific value described in the CN-CH4 certificate is actually consumed. In this case, if a gas vendor sells gas at a price per calorific value, it ends up in a drop in the vendor's sales profit.

Any method to compensate such a drop in the gas vendor's sales profit resulting from a calorific value change may be adopted freely. For example, the CN-CH4 supplier 3 of A may bear a portion of profit that the gas vendor loses, or the CN-CH4 supplier 3 may pay a fixed amount of money every month to the CN-CH4 supply/use management system 1, as an insurance to cover such a situation, in which case the CN-CH4 supply/use management system 1 bears the gas vendor's profit loss.

In the case where the CN-CH4 supplier 3 of A bears the gas vendor's profit loss, an amount of money Y[¥] to pay is given by formula (3).

$$Y = \{(\text{Have,Actu} - \text{Have,Plan})/\text{Have,Plan}\} \times Z \cdot W \; [¥] \; ... \; (3)$$

In formula (3), Have denotes an average calorific value [MJ/Nm3], Z denotes a calorific value of a total amount of CN-CH4 supplied [MJ] in one period, the calorific value being determined by the CN-CH4 supply plan, and W denotes a gas sales price [¥/MJ], where suffixes Plan and Actu denote a planning and execution, respectively. The average calorific value Have,Plan in the stage of planning is calculated by the arithmetic processing unit 13, using formula (2), and the average calorific value Have,Actu in the stage of execution is acquired from the grid status monitoring unit 14.

Because the amount of CN-CH4 supplied by the CN-CH4 supplier 3 of A become smaller than the planned amount of CN-CH4 supplied, a total amount of CN-CH4 supplied becomes smaller. This situation, however, results in a case where the total amount of CN-CH4 supplied is still larger than a planned amount of CN-CH4 used (CN-CH4 use plan c) and a case where the total amount of CN-CH4 supplied is smaller than the planned amount of CN-CH4 used (CN-CH4 use plan d).

In the latter case of the CN-CH4 use plan d, a shortage portion of CN-CH4 supplied must be compensated by purchasing a CN-CH4 certificate from a different grid or paying the cost of CO2 emission resulting from the shortage of CN-CH4, as described with reference to FIG. 5 or FIG. 6. Such a situation may also be handled by the above method of letting the CN-CH4 supplier 3 of A bear a profit loss caused by the shortage of CN-CH4 or letting the CN-CH4 supplier 3 pay a fixed amount of money every month to the CN-CH4 supply/use management system 1, in which case the CN-CH4 supply/use management system 1 bears the profit loss.

Reference Signs List

1 CN-CH4 supply/use management system (carbon neutral methane management system)
11 certificate issuing unit
12 CN-CH4 supply/use management unit (supply/use management unit)
13 arithmetic processing unit
14 grid status monitoring unit
2 city gas supplier
3 CN-CH4 supplier
4 city gas user
5 CN-CH4 user

Claims

1. A carbon neutral methane management system used for a grid that supplies a user with a mixed gas including city gas supplied from a city gas supplier and carbon neutral methane supplied from a carbon neutral methane supplier, the carbon neutral methane management system comprising:

   an arithmetic processing unit that calculates a calorific value of the mixed gas in the grid in a given unit period;
   a supply/use management unit that gives an instruction to adjust at least an amount of the city gas supplied to the grid or an amount of the city gas used by the user or an amount of the carbon neutral methane supplied to the grid or an amount of the carbon neutral methane used by the user in the given unit period so that the calorific value of the mixed gas in the grid, the caloric value being calculated by the arithmetic processing unit, is kept within a restriction range of the grid; and
   a certificate issuing unit that issues a certificate certifying that an amount of carbon neutral methane supplied to the grid by the carbon neutral methane supplier in the given unit period matches an amount of carbon neutral methane supplied that has been adjusted by the supply/use management unit or a certificate certifying that an amount of carbon neutral methane used by the user in the given unit period matches an amount of carbon neutral methane used that has been adjusted by the supply/use management unit.

2. The carbon neutral methane management system according to claim 1, further comprising a monitoring unit that acquires gas information on in-grid gas including a calorific value of a mixed gas in the grid and restriction information on the grid, wherein
   the arithmetic processing unit updates gas information on in-grid gas in the given unit period, using at least either a planned amount of the carbon neutral methane supplied to the grid by the carbon neutral methane supplier in the given period or a planned amount of the carbon neutral methane used by the user in the given period, and gas information on in-grid gas in a unit period before the given unit period, the gas information being acquired by the monitoring unit.

3. The carbon neutral methane management system according to claim 2, wherein
   when gas information on in-grid gas in the given unit period, the gas information being updated by the arithmetic processing unit, is out of a grid restriction range, the supply/use management unit changes a planned amount of city gas supplied to the grid in the given period or a planned amount of the carbon neutral methane supplied to the grid in the given period to make adjustment so that the gas information on in-grid gas in the given unit period is kept within the grid restriction range, and instructs the city gas supplier or the carbon neutral methane supplier to supply city gas or the carbon neutral methane according to a changed planned amount of city gas supplied or a changed planned amount of the carbon neutral methane supplied.

4. The carbon neutral methane management system according to claim 2, wherein
   when, in the given unit period, a planned amount of the carbon neutral methane used by the user is larger than a planned amount of the carbon neutral methane supplied to the grid by the carbon neutral methane supplier, the supply/use management unit corrects the planned amount of the carbon neutral methane used so that the planned amount of the carbon neutral methane used does not exceed the planned amount of the carbon neutral methane supplied, and instructs the user to use the carbon neutral methane according to a corrected planned amount of the carbon neutral methane used.

5. The carbon neutral methane management system according to claim 2, wherein

   when a planned amount of the carbon neutral methane used by the user is smaller than a planned amount of the carbon neutral methane supplied to the grid by the carbon neutral methane supplier, the supply/use management unit transmits information on an amount of carbon neutral methane left over, to the certificate issuing unit, wherein
   the certificate issuing unit issues a certificate carrying the information on the amount of carbon neutral methane left over, as a carbon neutral methane certificate, and wherein
   the supply/use management unit transfers the carbon neutral methane certificate to a different grid.

6. The carbon neutral methane management system according to claim 2, wherein
   when a planned amount of the carbon neutral methane used by the user is larger than a planned amount of the carbon neutral methane supplied to the grid by the carbon neutral methane supplier, the supply/use management unit compensates an amount of carbon neutral methane in shortage, acquires a carbon neutral methane certificate carrying information on an amount of surplus of carbon neutral methane in a different grid, and adjusts the planned amount of the carbon neutral methane used and the planned amount of the carbon neutral methane supplied.

# FIG. 1

CN-CH4 SUPPLY/USE MANAGEMENT SYSTEM

CN-CH4 SUPPLY CERTIFICATE

CN-CH4 USE CERTIFICATE

11 — CERTIFICATE ISSUING UNIT

FINAL CN-CH4 SUPPLY/USE PLAN

SUPPLY PLAN CHANGE INSTRUCTION

12 — CN-CH4 SUPPLY/USE MANAGEMENT UNIT

USE PLAN CHANGE INSTRUCTION

CN-CH4 USE PLAN

GAS INFORMATION ON IN-GRID GAS IN NEXT PERIOD

FINAL CN-CH4 SUPPLY/USE PLAN

GRID RESTRICTION INFORMATION

SUPPLY PLAN

13 — ARITHMETIC PROCESSING UNIT

14 — GRID STATUS MONITORING UNIT

GAS INFORMATION ON IN-GRID GAS

CITY GAS SUPPLIER — 2

GRID

CITY GAS USER — 4

CN-CH$_4$ SUPPLIER — 3

CN-CH4 USER — 5

CN-CH$_4$ SUPPLIER — 3

CN-CH4 USER — 5

EP 4 621 697 A1

FIG. 2

# FIG. 3A

## CN-CH4 SUPPLY PLAN IN PERIOD N

GRID RESTRICTION VALUE

☐ CN-CH4
▨ CITY GAS

a    b    b1    b2

CONVENTIONAL
CASE

CN-CH4
SUPPLY PLAN
APPLICATION

CN-CH4
SUPPLY PLAN
ADJUSTMENT

# FIG. 3B

## CN-CH4 USE PLAN IN PERIOD N

GRID RESTRICTION VALUE

☐ CN-CH4
▨ CITY GAS

b2    c    d    c

CN-CH4
SUPPLY PLAN

CN-CH4
USE PLAN
APPLICATION

CN-CH4
USE PLAN
ADJUSTMENT

## FIG. 4A

CN-CH4
SUPPLY PLAN

CN-CH4
USE PLAN
APPLICATION

□ CN-CH4
▨ CITY GAS

CN-CH4 USE APPLICATION IN PERIOD N

## FIG. 4B

GRID
RESTRICTION VALUE

a          b

CN-CH4
SUPPLY PLAN
APPLICATION

b1         b2

CN-CH4
SUPPLY PLAN
ADJUSTMENT

□ CN-CH4

▦ LEFTOVER CN-CH4
IDENTIFIED IN STAGE OF
PLANNING IN PERIOD N

▨ CITY GAS

CN-CH4 SUPPLY PLAN IN PERIOD N+1

14

*FIG. 5*

EP 4 621 697 A1

# FIG. 6

EP 4 621 697 A1

# FIG. 7

CN-CH4 SUPPLY PLAN IN PERIOD N AND
EXECUTION OF CN-CH4 SUPPLY IN PERIOD N+1

## INTERNATIONAL SEARCH REPORT

| International application No. |
| --- |
| **PCT/JP2022/042434** |

**A. CLASSIFICATION OF SUBJECT MATTER**

*G06Q 50/06*(2012.01)i
FI: G06Q50/06

According to International Patent Classification (IPC) or to both national classification and IPC

**B. FIELDS SEARCHED**

Minimum documentation searched (classification system followed by classification symbols)

G06Q50/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 7044936 B1 (TOKYO GAS CO., LTD.) 30 March 2022 (2022-03-30) | 1 |
|  | claims 1, 3, paragraphs [0015], [0016], [0066]-[0069] |  |
| A |  | 2-6 |
| A | JP 2020-133871 A (TOKYO GAS CO., LTD.) 31 August 2020 (2020-08-31) | 1-6 |
|  | entire text, all drawings |  |
| A | JP 2007-34865 A (HITACHI, LTD.) 08 February 2007 (2007-02-08) | 1-6 |
|  | entire text, all drawings |  |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 December 2022** | **20 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/042434** |

| Patent document cited in search report | | | Publication date (day/month/year) | Patent family member(s) | | | Publication date (day/month/year) |
| --- | --- | --- | --- | --- | --- | --- | --- |
| JP | 7044936 | B1 | 30 March 2022 | (Family: none) | | | |
| JP | 2020-133871 | A | 31 August 2020 | (Family: none) | | | |
| JP | 2007-34865 | A | 08 February 2007 | US | 2007/0038388 | A1 | |
| | | | | entire document | | | |
| | | | | DE | 102006034195 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020119143 A

**Non-patent literature cited in the description**

- Green Growth Strategy. Ministry of Economy, Trade and Industry, 18 June 2021
- Non-fossil Certificate. New Electric Power Network, 08 November 2022